# EUROPEAN PATENT APPLICATION

(11) **EP 4 579 369 A1**
(43) Date of publication of application: **02.07.2025**
(21) Application number: 24222010.1
(22) Date of filing: 20.12.2024
(51) Int. Cl.: G05D 1/248, G05D 1/646, G01C 21/00, G05D 105/15, G05D 107/20, G05D 109/10, G05D 111/50

(54) **WORK VEHICLE AND METHOD FOR CONTROLLING WORK VEHICLE**

(30) Priority: 27.12.2023 JP 2023220773
(71) Applicant: Kubota Corporation, Osaka 556-8601 (JP)
(72) Inventor: KURATA, Ryo, SAKAI-SHI, OSAKA, 590-0908 (JP); OKURA, Kohei, SAKAI-SHI, OSAKA, 590-0908 (JP)
(74) Representative: Cabinet Beau de Loménie

(57) **Abstract**

A work vehicle (100) capable of automatic steering driving includes a positioning system (120) to perform positioning of the work vehicle, and a controller (180) including a non-volatile memory. The controller is configured or programmed to estimate an orientation of the work vehicle based on a change over time of a position of the work vehicle measured by the positioning system, perform automatic steering control of the work vehicle based on the position and the orientation of the work vehicle and a set target route, store the orientation of the work vehicle in the non-volatile memory in response to a key-off operation of the work vehicle, and after a key-on operation of the work vehicle is performed, initiate the automatic steering control using the orientation stored in the non-volatile memory as an initial orientation of the work vehicle.

## Description

### CROSS REFERENCE TO RELATED APPLICATIONS

This application claims the benefit of priority to Japanese Patent Application No. 2023-220773 filed on December 27, 2023, to which the skilled person may refer when considering the present disclosure.

### BACKGROUND OF THE INVENTION

### 1. Field of the Invention

The present disclosure relates to work vehicles and methods for controlling work vehicles.

### 2. Description of the Related Art

Research and development are underway to automate work vehicles such as tractors used in fields. For example, work vehicles that travel by automatic steering, utilizing positioning systems such as GNSS (Global Navigation Satellite System) capable of precise positioning, have been put into practical use. Work vehicles that automatically control speed in addition to automatic steering have also been put into practical use.

JP 2022-166931 A discloses a work vehicle with which autonomous travel control can be activated even when the vehicle is stationary. The work vehicle disclosed in JP 2022-166931 A includes a vehicle body, a positioning device that measures its own position, a controller that executes autonomous travel control, and an autonomous travel switch that switches the autonomous travel control between activated and disabled. The controller executes autonomous travel control that adjusts the steering angle of the vehicle body so that the vehicle body travels along a set orientation based on its own position measured by the positioning device. When the vehicle body stops, the controller calculates the orientation of the vehicle from the travel path for at least one of the amount of time required before stopping and a predetermined travel distance before stopping, and when the autonomous travel switch is switched so as to activate the autonomous travel control while the vehicle body is stationary, the controller activates the autonomous travel control on the condition that the difference between the calculated orientation of the vehicle and the set orientation is within a first predetermined range.

### SUMMARY OF THE INVENTION

Work vehicles that travel by automatic steering are required to accurately detect the orientation of the vehicle. The orientation of the vehicle may be estimated based on time series position data acquired from a positioning system such as GNSS, for example.

However, after the key-on operation (i.e., the operation of turning on the key switch) of the work vehicle is performed, it is not possible to accurately estimate the orientation of the vehicle based on the time series position data acquired from the positioning system until the driver performs a speed-increasing operation and the vehicle speed reaches a certain speed (e.g., until it reaches 0.45 km/h or higher). Therefore, conventionally, automatic steering could not be activated in an extremely low speed state immediately after the key-on operation of the work vehicle.

Example embodiments of the present disclosure provide work vehicles with which automatic steering that each can be activated even in an extremely low speed state immediately after the key-on operation, and also provide control methods for the work vehicles.

A work vehicle according to an example embodiment of the present disclosure is a work vehicle capable of automatic steering driving, including a positioning system to perform positioning of the work vehicle, and a controller including a non-volatile memory. The controller is configured or programmed to estimate an orientation of the work vehicle based on a change over time of a position of the work vehicle measured by the positioning system, perform automatic steering control of the work vehicle based on the position and the orientation of the work vehicle and a set target route, store the orientation of the work vehicle in the non-volatile memory in response to a key-off operation of the work vehicle, and after a key-on operation of the work vehicle is performed, initiate the automatic steering control using the orientation stored in the non-volatile memory as an initial orientation of the work vehicle.

Example embodiments of the present disclosure may be realized by apparatuses, systems, methods, integrated circuits, computer programs, or computer readable non-transitory storage media, or any combination thereof. The computer readable storage media may include volatile storage media or a nonvolatile storage media. Each of the apparatuses may include a plurality of apparatuses. Where the apparatuses include two or more apparatuses, the two or more apparatuses may be provided within a single device or may be provided separately within two or more separate devices.

According to example embodiments of the present disclosure, automatic steering can be activated even in an extremely low speed state immediately after the key-on operation.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a perspective view showing an example of the appearance of a work vehicle in Example Embodiment 1 of the present invention.
FIG. **2** is a side view schematically showing an example of the work vehicle and an implement linked to the work vehicle.
FIG. **3** is a block diagram showing an example schematic configuration of the work vehicle and an implement.
FIG. **4** is a conceptual diagram showing an example of the work vehicle to perform positioning using RTK-GNSS.
FIG. **5** is a schematic diagram showing an example of an operation terminal and operation switches provided inside the cabin.
FIG. **6** is a block diagram showing an example hardware configuration of an ECU.
FIG. **7A** is a diagram showing an example of how the work vehicle travels in the automatic steering mode.
FIG. **7B** is a diagram showing another example of how the work vehicle travels in the automatic steering mode.
FIG. **7C** is a diagram showing yet another example of how the work vehicle travels in the automatic steering mode.
FIG. **8** is a diagram schematically showing an example of a target route for the work vehicle traveling in a field by automatic steering.
FIG. **9** is a flow chart showing an example of an operation performed by a controller during automatic steering.
FIG. **10A** is a diagram showing an example of the work vehicle traveling along a target route.
FIG. **10B** is a diagram showing an example of the work vehicle located at a position shifted to the right from the target route.
FIG. **10C** is a diagram showing an example of a work vehicle located at a position shifted to the left from the target route.
FIG. **10D** is a diagram showing an example of the work vehicle oriented in a direction inclined relative to the target route.
FIG. **11** is a flow chart showing an example process performed immediately after the key-on operation.
FIG. **12** is a flow chart showing a specific example of the process of step S230 in FIG. **11**.
FIG. **13A** is a diagram showing an example message displayed on the operation terminal.
FIG. **13B** is a diagram showing an example message displayed on the operation terminal.
FIG. **13C** is a diagram showing an example message displayed on the operation terminal.
FIG. **13D** is a diagram showing an example message displayed on the operation terminal.

### DETAILED DESCRIPTION OF THE EXAMPLE EMBODIMENTS

Hereinafter, example embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. Note that the accompanying drawings and the following description, which are provided by the present inventors to make it possible to understand the present disclosure, are not intended to limit the scope of the claims. In the following description, elements having identical or similar functions are denoted by identical reference numerals.

The following example embodiments are only examples, and the techniques according to the present disclosure are not limited to the following example embodiments. For example, numerical values, shapes, steps, orders of steps, layout of a display screen, etc., which are indicated in the following example embodiments are only examples, and admit of various modifications so long as it makes technological sense. Any one implementation may be combined with another so long as it makes technological sense to do so.

One example of the "controller" in the present disclosure may be a computer that includes at least one processor and at least one memory that is capable of storing a computer program (code) that causes a control process to be executed by the processor. Another example of the "controller" may be a computer that includes a hardware accelerator such as an FPGA (Field-Programmable Gate Array), an ASSP (Application Specific Standard Product), or an ASIC (Application-Specific Integrated Circuit) configured to execute the control process.

"Processor" in the present disclosure may be a hardware electronic circuit such as a CPU (Central Processing Unit), a GPU (Graphics Processing Unit), a DSP (Digital Signal Processor), an ISP (Image Signal Processor), or an NPU (Neural Network Processing Unit). "Memory" may be a hardware electronic circuit such as a ROM (Read Only Memory) or a RAM (Random Access Memory). A portion of the memory may be a storage medium connected to the processor by wiring or a network. These hardware electronic circuits may be implemented by one or more integrated circuits (ICs) or large-scale integrated circuits (LSIs). Each functional unit or block within an electronic circuit and components related thereto may be separately manufactured as individual integrated circuit chips, or may be manufactured as a single integrated circuit chip by combining some or all of these functional units or blocks.

A program may be designed to cause the processor to perform one or more functions, operations, steps, or processes in the example embodiments of the present invention.

Example embodiments in which the technologies of the present disclosure are applicable to agricultural tractors, which are examples of work vehicles, will be described below. The technologies of the present disclosure can be applied not only to tractors, but also to any work vehicles that travel by automatic steering. The work vehicles may be, for example, rice transplanters, combine harvesters, mowers, harvesters, snowplows, or construction work vehicles.

Work vehicles of example embodiments of the present disclosure and methods for controlling the operations of the work vehicles will be described.

A work vehicle according to the present example embodiment includes a positioning system to position the work vehicle and a controller configured or programmed to control automatic steering driving. The controller includes one or more processors and one or more memories. The one or more memories may include a non-volatile memory that stores computer programs executed by the processor and various data generated in the processes by the processor. The controller does not need to be a single computer, and may be a collection of computers.

The controller can be configured or programmed to operate both in the automatic steering mode and the manual steering mode. The controller may be configured or programmed to switch between the automatic steering mode and the manual steering mode in response to an operation by the driver, for example. In the automatic steering mode, the controller is configured or programmed to control the steering of the work vehicle so that the work vehicle travels along the target route based on the position and the orientation of the work vehicle measured by the positioning system and the target route stored in the memory.

The positioning system is arranged inside or outside the work vehicle. The positioning system may include a GNSS unit that performs positioning using RTK (Real Time Kinematic)-GNSS, for example. The GNSS unit identifies the position of the work vehicle based on signals from a plurality of GNSS satellites and outputs time series position data.

The target route is a route that is set within the area where the work vehicle travels and is used as a target for travel. The target route is set before automatic steering driving begins and is stored in a storage such as a memory. The target route can be set within a field, for example.

The work vehicle in the present example embodiment may be a tractor with an implement used for digging up yams, for example, attached thereto. In the work of digging up yams, the work vehicle travels a relatively long distance at a very low speed (e.g., about 0.1 to 0.2 km/h). Therefore, it takes a long time to complete a series of work. Such long-time work can be made more efficient by using the automatic steering function of the work vehicle. On the other hand, a worker who carries out long-time work, such as harvesting yams, by using the automatic steering function of the work vehicle may take a break during the work (e.g., for lunch). For example, the worker may take a break after stopping the engine by performing a key-off operation (i.e., turning off the key switch) with the implement still stuck in the ground during work. After the break, the worker will resume work by performing a key-on operation of the work vehicle again to start the engine. In order to re-activate the automatic steering and resume work, it was necessary, with a conventional work vehicle, to once increase the speed to be equal to or greater than a predetermined reference speed (e.g., 0.45 km/h) so as to determine the orientation of the work vehicle based on the time series position data from the positioning system. This is because, even when using a high-accuracy positioning system such as RTK-GNSS, it is difficult to accurately estimate the orientation of the work vehicle due to the influence of fluctuations in the position data while the moving speed of the work vehicle (hereinafter referred to also as the "vehicle speed") is in the speed range as low as below 0.45 km/h, for example.

However, it is difficult to increase the speed to 0.45 km/h or more with the implement still stuck in the ground. If it is necessary to increase the speed to 0.45 km/h or more even though the worker wants to resume work at an extremely low speed of about 0.1 to 0.2 km/h, the worker will have to perform unnecessary driving operations, thus deteriorating from the convenience. This problem arises not only when the work vehicle performs the operation of harvesting yams, but the problem similarly arises also when the work vehicle needs to operate at an extremely low speed (e.g., 0.2 km/h or less) for any given task.

In order to solve this problem, the controller in the present example embodiment is configured or programmed to execute the following operations.
(S1) Estimate the orientation of the work vehicle based on the change over time of the position of the work vehicle measured by the positioning system.
(S2) Perform the automatic steering control of the work vehicle based on the position and the orientation of the work vehicle and the set target route.
(S3) Store the orientation of the work vehicle in a non-volatile memory in response to a key-off operation of the work vehicle.
(S4) After a key-on operation of the work vehicle is performed, initiate the automatic steering control using the orientation stored in the non-volatile memory as the initial orientation of the work vehicle.

With steps S3 and S4 above, after the key-on operation is performed, it is possible to resume the automatic steering control based on the orientation of the work vehicle at the time of the previous key-off operation without increasing the speed to the reference speed (e.g., 0.45 km/h). Thus, it is possible to start tasked travel by automatic steering even immediately after the key-on operation is performed with the implement still stuck in the ground, for example, thus significantly improving convenience.

The configuration and the operation of the work vehicle of the present example embodiment will now be described in detail.

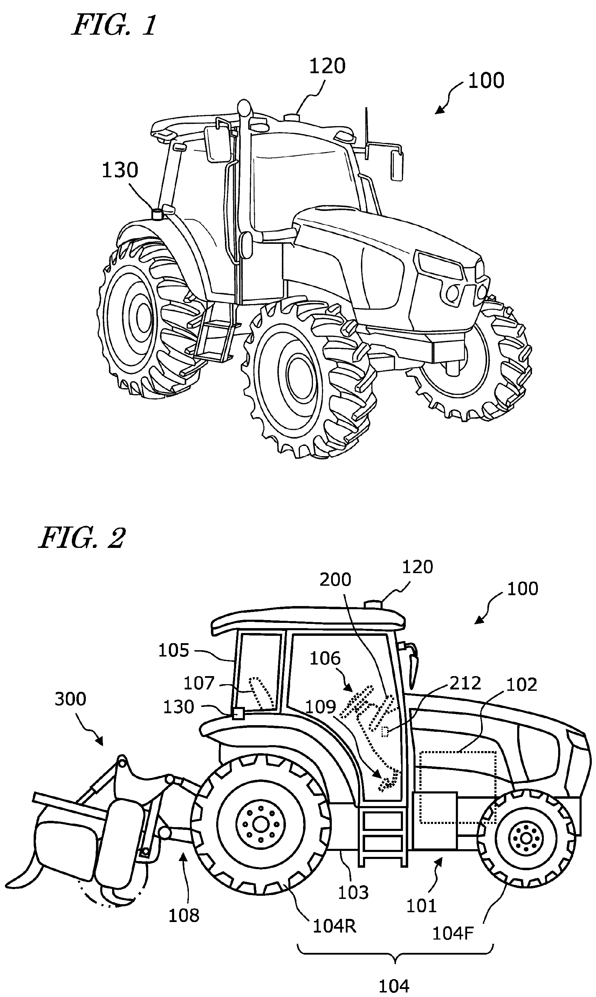

FIG. **1** is a perspective view showing an example of the appearance of a work vehicle **100** in the present example embodiment. FIG. **2** is a side view schematically showing an example of the work vehicle **100** and an implement **300** linked to the work vehicle **100**. The work vehicle in the present example embodiment is a tractor used in a field. The technologies in the present example embodiment can also be applied to work vehicles other than tractors.

The work vehicle **100** in the present example embodiment includes a GNSS unit **120** and one or more obstacle sensor **130**. While one obstacle sensor **130** is illustrated in FIG. **1**, the obstacle sensor **130** may be provided at a plurality of locations on the work vehicle **100**. Note that the obstacle sensor **130** is provided as needed. If the obstacle sensor **130** is not needed, the work vehicle **100** may not include the obstacle sensor **130**.

As shown in FIG. **2**, the work vehicle **100** includes a vehicle body **101**, a prime mover (engine) **102**, and a transmission **103**. The vehicle body **101** includes wheels **104** with tires and a cabin **105**. The wheels **104** include a pair of front wheels **104F** and a pair of rear wheels **104R**. A driver seat **107**, a steering device **106**, a plurality of pedals **109**, an operation terminal **200**, and operation switches are provided inside the cabin **105**. The switches include a key switch **212** (ignition switch) to perform the operation to initiate and stopping the engine. One or both of the front wheels **104F** and the rear wheels **104R** may be replaced with a plurality of wheels with an endless track attached thereto (i.e., crawlers), rather than wheels with tires.

The GNSS unit **120** in the present example embodiment includes a GNSS receiver. The GNSS receiver may include an antenna that receives signals from GNSS satellites and a processor that determines the position of the work vehicle **100** based on the signals received by the antenna. The GNSS unit **120** receives GNSS signals transmitted from a plurality of GNSS satellites and performs positioning based on the GNSS signals. GNSS is a generic term for satellite positioning systems such as GPS (Global Positioning System), QZSS (Quasi-Zenith Satellite System, e.g., MICHIBIKI), GLONASS, Galileo, and BeiDou. While the GNSS unit **120** of the present example embodiment is provided at the top of the cabin **105**, it may be provided at other locations.

The GNSS unit **120** may include an inertial measurement unit (IMU). Alternatively, the IMU may be provided at a location separate from the GNSS unit **120**. The signals from the IMU can be used to complement the position data from the GNSS. The IMU can measure the tilt and minute movements of the work vehicle **100**. Using data acquired by the IMU, the positioning performance can be improved by complementing or correcting the position data based on the satellite signals. In the present example embodiment, the combination of the GNSS unit **120** and the IMU functions as the "positioning system" that measures or estimates the position and the orientation of the work vehicle **100**.

The positioning system may include other types of devices such as a LiDAR sensor or a camera (including an image sensor). If there are geographic objects in the environment in which the work vehicle **100** is traveling that function as characteristic points, the position and the orientation of the work vehicle **100** can be estimated with high accuracy based on data acquired by the LiDAR sensor or the camera and the environment map stored in the storage **170** in advance. The LiDAR sensor or the camera may be used in conjunction with the GNSS receiver. By using data acquired by the LiDAR sensor or the camera to correct or complement position data based on GNSS signals, it is possible to identify the position of the work vehicle **100** with a higher accuracy.

In the example shown in FIG. **1** and FIG. **2**, the obstacle sensor **130** is provided at the rear of the vehicle body **101**. The obstacle sensor **130** may be arranged in portions of the vehicle body **101** other than at the rear. For example, one or more obstacle sensors **130** may be arranged on the side or front of the vehicle body **101**, and on the cabin **105**. The obstacle sensor **130** detects objects that are present around the work vehicle **100**. The obstacle sensor **130** may include, for example, a laser scanner or an ultrasonic sonar. The obstacle sensor **130** outputs a signal indicating that an obstacle exists when an object exists within a predetermined distance from the obstacle sensor **130**. A plurality of obstacle sensors **130** may be arranged at different locations of the vehicle body of the work vehicle **100**. For example, a plurality of laser scanners and a plurality of ultrasonic sonars may be arranged at different locations of the vehicle body. By including such a plurality of obstacle sensors **130**, it is possible to reduce blind spots in monitoring obstacles around the work vehicle **100**. Note that as mentioned above, the work vehicle **100** may not include the obstacle sensor **130**.

The prime mover **102** may be a diesel engine, for example. An electric motor may be used instead of a diesel engine. The transmission **103** can vary the propulsion and traveling speed of the work vehicle **100** by changing the gear. The transmission **103** can also switch between forward and reverse for the work vehicle **100**.

The steering device **106** includes a steering wheel, a steering shaft connected to the steering wheel, and a power steering device that assists the steering by the steering wheel. The front wheels **104F** are wheels usable to steer the work vehicle **100**, and it is possible to change the direction of travel of the work vehicle **100** by changing the steering angle. The steering angle of the front wheels **104F** can be changed by operating the steering wheel. The power steering device includes a hydraulic device or an electric motor that supplies auxiliary power to change the steering angle of the front wheels **104F**. When automatic steering is performed, the steering angle is automatically adjusted by the force from the hydraulic device or the electric motor as controlled by the controller arranged in the work vehicle **100**.

The plurality of pedals **109** include an accelerator pedal, clutch pedal, and a brake pedal. Each pedal is provided with a sensor that detects being depressed by foot.

A link device **108** is provided at the rear of the vehicle body **101**. The link device **108** includes, for example, a 3-point support device (also referred to as a "3-point link" or "3-point hitch"), a PTO (Power Take Off) shaft, a universal joint, and a communication cable. The link device **108** allows the implement **300** to be attached to or detached from the work vehicle **100**. The link device **108** can control the position or attitude of the implement **300** by raising or lowering the 3-point link using a hydraulic device, for example. Power can be sent from the work vehicle **100** to the implement **300** via the universal joint. The work vehicle **100** can cause the implement **300** to perform a predetermined task while pulling the implement **300**. The link device may be provided at the front of the vehicle body **101**. In that case, the implement can be connected to the front of the work vehicle **100**.

While the implement **300** shown in FIG. **2** is a rotary tiller, the implement **300** is not limited to a rotary tiller. For example, any implement such as a mower (lawn mower), a seeder (seed sower), a spreader (fertilizer spreader), a rake implement, a baler (lawn collector), a harvester (harvesting machine) a sprayer, or a harrow can be connected to the work vehicle **100**.

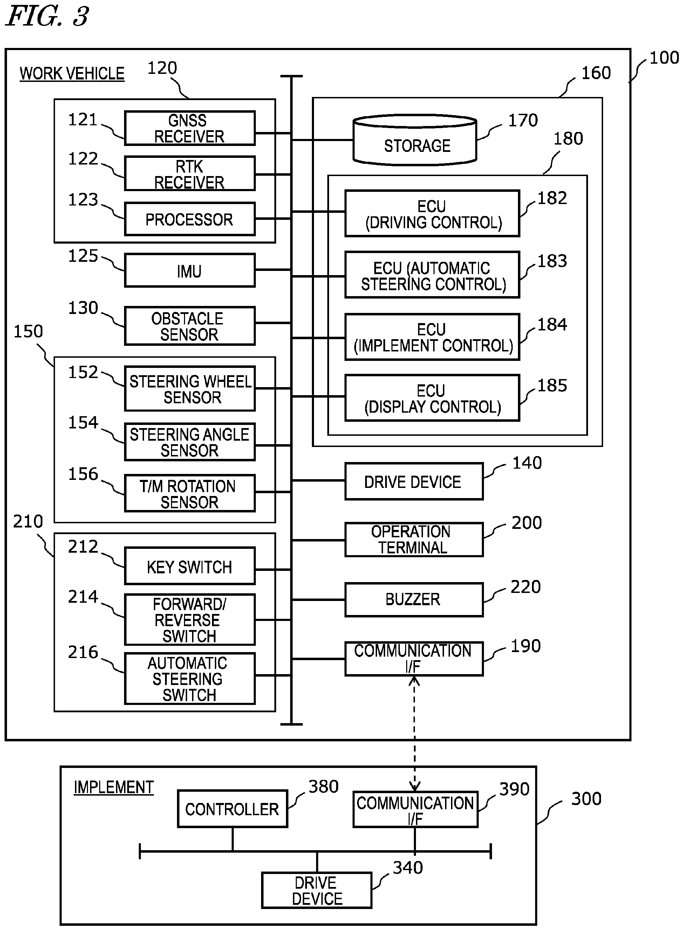

FIG. **3** is a block diagram showing an example schematic configuration of the work vehicle **100** and the implement **300**. The work vehicle **100** and the implement **300** can communicate with each other via the communication cable included in the link device **108**.

The work vehicle **100** in the example of FIG. **3** includes the GNSS unit **120**, an IMU **125**, the obstacle sensor **130**, sensors **150**, operation switches **210**, a control system **160**, a drive device **140**, the operation terminal **200**, a buzzer **220**, and a communication interface (I/F) **190**. These elements are connected to each other so that the elements can communicate with each other via a bus such as CAN (Controller Area Network), for example. The GNSS unit **120** includes a GNSS receiver **121**, an RTK receiver **122**, and a processor **123**. The sensors **150** may include, for example, a steering wheel sensor **152**, a steering angle sensor **154**, and a transmission (T/M) rotation sensor **156**. The switches **210** may include, for example, the key switch **212**, a switch **214** to switch between forward and reverse, and a switch **216** to switch between the automatic steering mode and the manual steering mode. The control system **160** includes the storage **170** and a controller **180**. The controller **180** includes a plurality of ECUs **182**, **183**, **184**, and **185**. The implement **300** includes a drive device **340**, a controller **380**, and a communication interface (I/F) **390**. Note that FIG. **3** shows the elements that are relatively highly relevant to the automatic steering by the work vehicle **100**, and the other elements are not shown in the figure.

The GNSS receiver **121** in the GNSS unit **120** receives satellite signals transmitted from a plurality of GNSS satellites and generates GNSS data based on the satellite signals. The GNSS data is generated in a predetermined format, such as the NMEA-0183 format. The GNSS data may include, for example, values indicating the identification numbers, elevation angles, azimuth angles, and reception strength of satellites from which satellite signals are received.

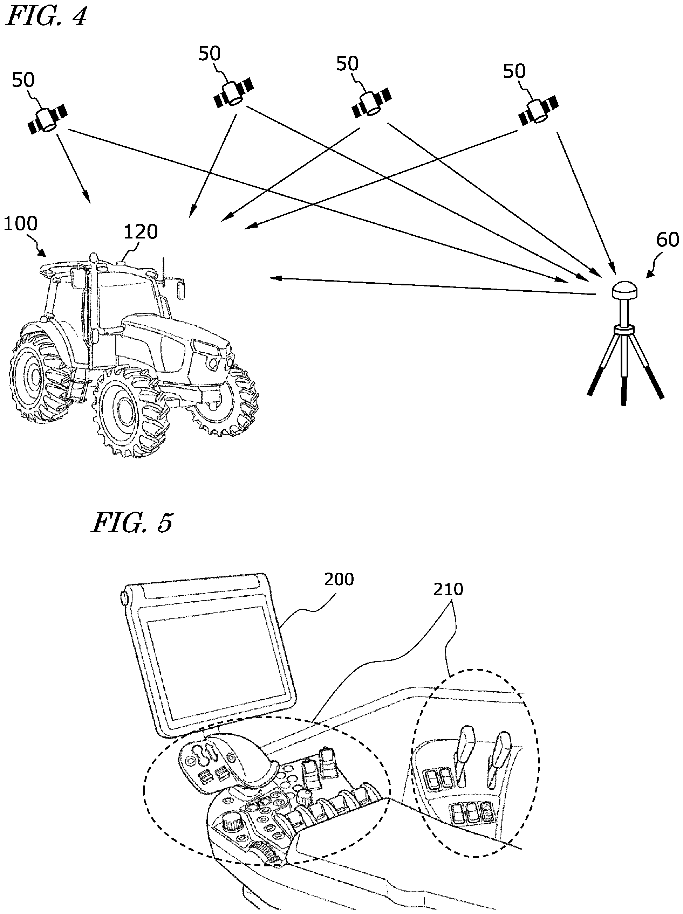

The GNSS unit **120** shown in FIG. **3** performs positioning of the work vehicle **100** using RTK (Real Time Kinematic)-GNSS. FIG. **4** is a conceptual diagram showing an example of the work vehicle **100** that performs positioning using RTK-GNSS. With the positioning using RTK-GNSS, correction signals transmitted from a reference station **60** are used, in addition to the satellite signals transmitted from a plurality of GNSS satellites **50**. The reference station **60** may be installed near the field where the work vehicle **100** performs a tasked travel (e.g., within 10 km of the work vehicle **100**). The reference station **60** generates a correction signal in RTCM format, for example, based on satellite signals received from a plurality of GNSS satellites **50**, and transmits the correction signal to the GNSS unit **120**. The RTK receiver **122** includes an antenna and a modem, and receives the correction signal transmitted from the reference station **60**. The processor **123** of the GNSS unit **120** is configured or programmed to correct the positioning results by the GNSS receiver **121** based on the correction signal. Using RTK-GNSS, it is possible to perform positioning with an accuracy of a few centimeters, for example. Position information including latitude, longitude and altitude is acquired through high-accuracy positioning using RTK-GNSS. The GNSS unit **120** calculates the position of the work vehicle **100** at a frequency of about 1 to 10 times per second, for example. The GNSS unit **120** outputs time series position data including information of the calculated position (coordinates).

Note that the positioning method is not limited to RTK-GNSS, and any positioning method may be used (such as interferometric positioning or relative positioning) as long as position information of the required accuracy is obtained. For example, positioning using VRS (Virtual Reference Station) or DGPS (Differential Global Positioning System) may be used. If position information of the required accuracy can be obtained without using the correction signal transmitted from the reference station **60**, the position information may be generated without using the correction signal.

The IMU **125** includes a 3-axis accelerometer and a 3-axis gyroscope. The IMU **125** may also include an orientation sensor such as a 3-axis geomagnetic sensor. The IMU **125** functions as a motion sensor and can output signals indicating various quantities such as acceleration, speed, displacement, and attitude of the work vehicle **100**. The ECU **183** for automatic steering control can estimate the position and orientation of the work vehicle **100** with higher accuracy based on the signals output from the IMU **125** in addition to the signals output from the GNSS unit **120**. The signals output from the IMU **125** can be used to correct or complement the position calculated based on the GNSS signal and the correction signal. The IMU **125** outputs signals at a higher frequency than the GNSS signal. Using the signals output at a higher frequency, it is possible to measure the position and orientation of the work vehicle **100** at a higher frequency (e.g., 50 Hz or more). Instead of the IMU **125**, a 3-axis accelerometer and a 3-axis gyroscope may be provided separately. The IMU **125** may be provided at a position away from the GNSS unit **120** or may be provided in the same housing as the GNSS unit **120**.

In the present example embodiment, the combination of the GNSS unit **120** and the IMU **125** functions as a positioning system. The positioning system may further include other types of sensors, such as a LiDAR sensor or an image sensor. If there are geographic objects in the environment in which the work vehicle **100** is traveling that function as landmarks, the position and orientation of the work vehicle **100** can be estimated by matching sensor data output from these sensors with an environment map. With such a configuration, an external sensor such as a LiDAR sensor or an image sensor may be included in the positioning system.

The drive device **140** includes various devices necessary to drive the work vehicle **100** and drive the implement **300**, such as the prime mover **102**, the transmission **103**, the steering device **106**, and the link device **108** described above. The prime mover **102** may include an internal combustion engine, such as a diesel engine. The drive device **140** may include an electric motor for traction instead of or in addition to the internal combustion engine.

The steering wheel sensor **152** measures the rotation angle of the steering wheel of the work vehicle **100**. The steering angle sensor **154** measures the steering angle of the front wheels **104F**, which are steering wheels.

The T/M rotation sensor **156** is a sensor to measure the rotation speed of the axle connected to the wheels **104**, i.e., the number of rotations per unit time. The T/M rotation sensor **156** may be a sensor that uses a magnetoresistive element (MR), a Hall element, or an electromagnetic pickup. The T/M rotation sensor **156** outputs a pulse signal proportional to the rotation speed of the gear included in the transmission, for example. The T/M rotation sensor **156** may be used to determine the vehicle speed and the direction of travel of the work vehicle **100**.

The measurement values taken by the steering wheel sensor **152**, the steering angle sensor **154**, and the T/M rotation sensor **156** are used to perform automatic steering control by the ECU **183**.

The storage **170** includes one or more storage medium, such as a flash memory or a magnetic disk. The storage **170** stores various data generated by the sensors and the controller **180**. The data stored in the storage **170** may include map data of the environment in which the work vehicle **100** travels and data of the target route for automatic steering. The storage **170** may also store computer programs that cause the ECUs in the controller **180** to perform the various operations to be described below. Such computer programs may be provided to the work vehicle **100** via a storage medium (e.g., a semiconductor memory or an optical disc) or an electrical communication line (e.g., the Internet).

The controller **180** may be configured or programmed to include the ECU **182** for driving control, the ECU **183** for automatic steering control, the ECU **184** for implement control, and the ECU **185** for display control. The ECU **182** controls the speed of the work vehicle **100** by controlling the prime mover **102**, the transmission **103**, the accelerator, and the brake included in the drive device **140**. Also, the ECU **182** controls the steering of the work vehicle **100** by controlling the hydraulic device or the electric motor included in the steering device **106** based on the measurement values of the steering wheel sensor **152**. The ECU **183** performs calculation and control to achieve the automatic steering driving based on signals output from the GNSS unit **120**, the steering wheel sensor **152**, the steering angle sensor **154**, the T/M rotation sensor **156**, etc. During automatic steering driving, the ECU **183** sends a steering angle change instruction to the ECU **182**. The ECU **182** changes the steering angle by controlling the steering device **106** in response to the instruction. The ECU **184** controls the operation of the link device **108** in order to make the implement **300** perform the desired operation. The ECU **184** also generates signals to control the operation of the implement **300**, and transmits the signal from the communication I/F **190** to the implement **300**. The ECU **185** controls the display of the operation terminal **200**. The ECU **185**, for example, causes the display terminal of the operation terminal **200** to display various items, such as a map of the field, the position of the work vehicle **100** and the target route on the map, pop-up notifications, and the setting screen.

With the operation of these ECUs, it is possible to drive by manual steering or automatic steering. During automatic steering driving, the controller **180** controls the drive device **140** based on the position of the work vehicle **100**, which is measured or estimated by the GNSS unit **120**, and the target route stored in the storage **170**. Thus, it is possible to cause the work vehicle **100** to travel along the target route.

The plurality of ECUs included in the controller **180** can communicate with each other according to a vehicle bus standard, such as CAN, for example. In FIG. **3**, the ECUs **182**, **183**, **184**, and **185** are shown as individual blocks, but their functions may each be implemented by a plurality of ECUs. An in-vehicle computer that integrates at least some of the functions of the ECU **182**, **183**, **184**, and **185** may be provided. The controller **180** may be configured or programmed to include ECUs other than the ECUs **182**, **183**, **184**, and **185**. Any number of ECUs may be provided according to the functions.

The communication I/F **190** is a circuit used to communicate with a communication I/F **390** of the implement **300**. The communication I/F **190** exchanges signals in conformity with the ISOBUS standard, such as ISOBUS-TIM, with the communication I/F **390** of the implement **300**. This allows the implement **300** to perform desired operations and to acquire information from the implement **300**. The communication I/F **190** may communicate with an external computer via a wired or wireless network. The external computer may be a server computer in an agricultural management system that centrally manages information regarding fields, for example, on a cloud and supports agriculture by utilizing data on the cloud. The external computer may be a mobile terminal device used by the user.

The operation terminal **200** is a display terminal for the user to perform operations related to the travel of the work vehicle **100** and the operation of the implement **300**, and is also referred to as a virtual terminal (VT) or a terminal monitor. The operation terminal **200** is an example of a display terminal that provides a user interface to perform operations to start and stop automatic steering control. The operation terminal **200** may include a display terminal such as a touch screen and/or one or more buttons. By operating the operation terminal **200**, the user can perform various operations, such as switching the automatic steering mode on and off, setting the initial position of the work vehicle **100**, setting the target route, recording or editing maps, and switching the implement **300** on and off. At least some of these operations may also be realized by operating the operation switches **210**. FIG. **3** shows, as examples of the operation switches **210**, the key switch **212**, the forward/reverse switch **214**, and the automatic steering switch **216**.

The buzzer **220** is a sound output device that emits warning sounds to notify the user of abnormalities. For example, the buzzer **220** emits a warning sound when the work vehicle **100** deviates from the target route by a predetermined distance or more during automatic steering driving. The buzzer **220** may emit a warning sound also when the obstacle sensor **130** detects an obstacle. Instead of the buzzer **220**, a similar function may be achieved by the speaker of the operation terminal **200**.

The drive device **340** in the implement **300** performs the operation necessary for the implement **300** to perform predetermined work. The drive device **340** includes a device in accordance with the application of the implement **300**, such as a hydraulic device, an electric motor, or a pump. The controller **380** is configured or programmed to control the operation of the drive device **340**. The controller **380** is configured or programmed to cause the drive device **340** to perform various operations in response to signals transmitted from the work vehicle **100** via the communication I/F **390**. Also, signals corresponding to the status of the implement **300** can be transmitted from the communication I/F **390** to the work vehicle **100**.

FIG. **5** is a diagram showing an example of the operation terminal **200** and the operation switches **210** provided inside the cabin **105**. The switches **210**, which include a plurality of switches that can be operated by the user, are arranged inside the cabin **105**. The switches **210** include, for example, the key switch **212** for start and stop the engine, the switch **214** to switch between forward and reverse (e.g., a shuttle lever or a shuttle switch), the switch **216** to switch between the automatic steering (auto-steer) mode and the manual steering (manual steer) mode, a switch to select the main transmission gear or the auxiliary transmission gear, and a switch to raise and lower the implement **300**. The key switch **212** may have any structure, such as a toggle switch or a push button switch. If the work vehicle **100** is driven by an internal combustion engine, the key switch **212** is also called an "ignition switch".

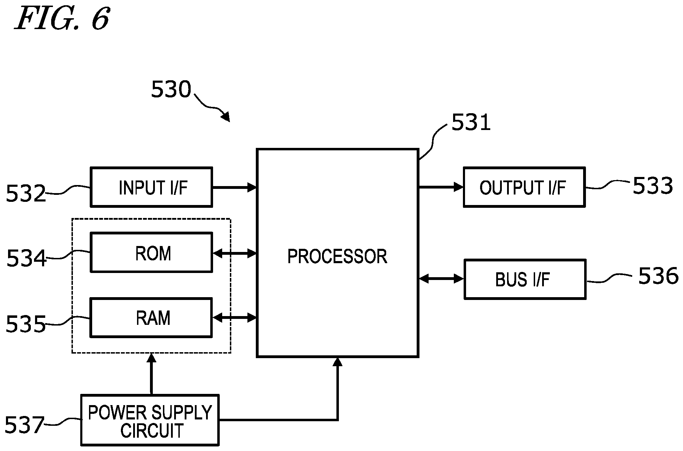

FIG. **6** is a block diagram showing an example hardware configuration of each ECU in the present example embodiment. The ECU **530**, for example, includes one or more processor **531**, an input I/F **532**, an output I/F **533**, a ROM **534**, a RAM **535**, a bus I/F **536**, and a power supply circuit **537**. Software (or firmware) to execute at least one process by the one or more processor may be implemented on the ROM **534**. Such software may be stored on a computer-readable recording medium, and provided via a recording medium or a network.

The processor **531** may be a semiconductor integrated circuit, and may include a central processing unit (CPU). The processor **531** may be implemented by a microprocessor, for example. The processor **531** may include a GPU. The processor **531** may be configured or programmed to realize the desired process by sequentially executing the computer program (or program module) stored in the ROM **534**.

The ECU may include, for example, an FPGA, an ASIC, an ASSP, or a combination of two or more of these circuits, in addition to or instead of the processor **531**.

The input I/F **532** is an input circuit that receives digital signals or analog signals output from various sensors. The output I/F **533** is an output circuit that outputs signals to drive actuators and lamps, etc., within the work vehicle **100**.

The ROM **534** is a non-volatile memory, such as a writable memory (e.g., PROM or EPROM), a rewritable memory (e.g., flash memory), or a read-only memory, for example. The ROM **534** stores a program that controls the operation of processor **531**. The ROM **534** does not need to be a single storage medium, but may be a collection of a plurality of storage media. Some of the plurality of recording media may be removable memory.

The RAM **535** provides a work area for temporarily expanding the control program stored in the ROM **534** at boot. The RAM **535** does not need to be a single recording medium, and may be a collection of a plurality of recording media.

The bus I/F **536** may be a bus interface to connect the ECU to a CAN bus, for example.

The power supply circuit **537** is a circuit that lowers a relatively high external voltage to generate a relatively low voltage that is required by each of the processor **531**, the ROM **534**, and the RAM **535**.

Next, the operation of the work vehicle **100** will be described. The controller **180** in the present example embodiment can be configured or programmed to switch between the manual driving mode and the automatic steering mode in response to the operation by the user (e.g., driver) of the work vehicle **100**. In the manual driving mode, the controller **180** is configured or programmed to control steering by driving the power steering device in response to the operation of the steering wheel by the user. In the automatic steering mode, the controller **180** is configured or programmed to control steering by driving the power steering device based on the position and orientation (orientation) of the work vehicle **100** estimated based on data output from the GNSS unit **120** and the IMU **125**, and a target route recorded in advance. Also in the automatic steering mode, the speed is adjusted by an acceleration operation and a braking operation by the user.

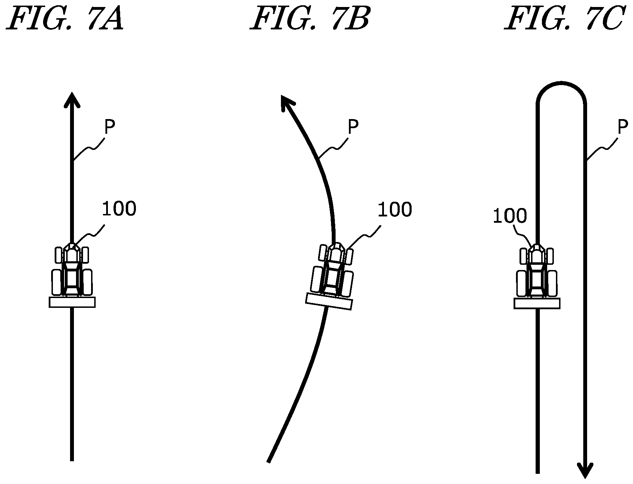

FIGS. **7A** to **7C** are diagrams showing examples of how the work vehicle **100** travels in the automatic steering mode. FIG. **7A** schematically shows how the work vehicle **100** travels along a straight target route **P**. FIG. **7B** schematically shows how the work vehicle **100** travels along a curved target route **P**. FIG. **7C** schematically shows how the work vehicle **100** travels along a target route **P** that includes two adjacent straight routes and a curved route that connects them. The target route **P** is pre-set and is recorded in the storage **170**. When the work vehicle **100** is traveling in the automatic steering mode, the controller **180** repeatedly calculates the deviation between the target route **P** and the position and orientation of the work vehicle **100** estimated based on the data output from the GNSS unit **120** and the IMU **125** and controls the steering device so as to reduce the deviation. This causes the work vehicle **100** to travel along the target route **P**.

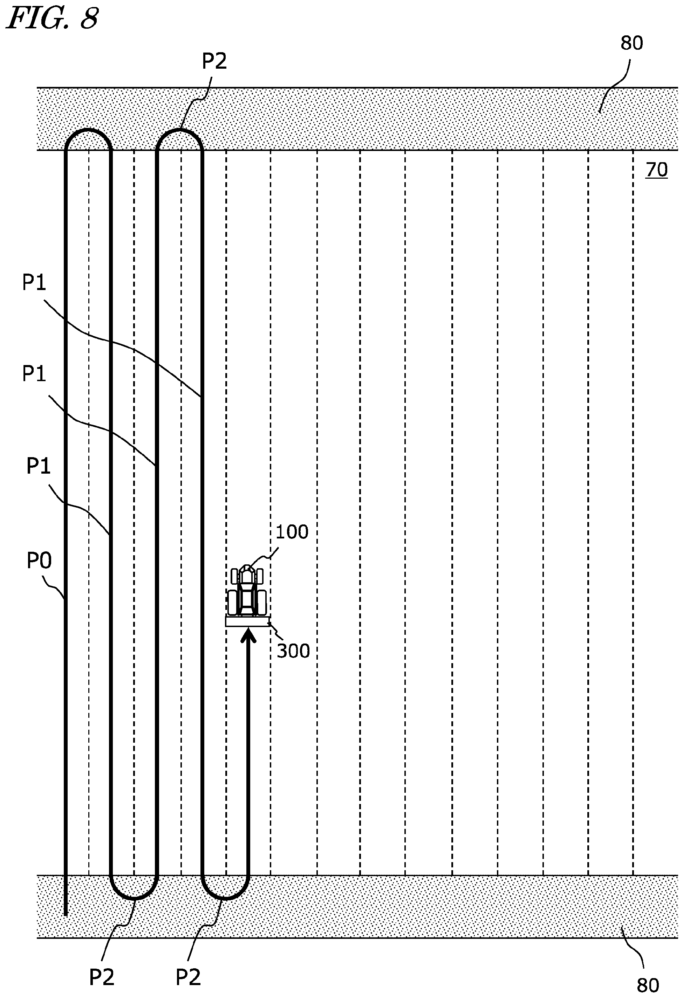

FIG. **8** is a diagram schematically showing an example of the target route for the work vehicle **100** traveling in a field by automatic steering. In this example, the field includes a work area **70** in which the work vehicle **100** and the implement **300** perform work, and a headland **80** located around the outer edge of the field. The user can set in advance which areas of the field correspond to a work area **70** and the headland **80** on the map, by operating the operation terminal **200**. The target route in this example includes a plurality of parallel main routes **P1** and a plurality of turning routes **P2** that connect together the plurality of main routes **P1**. The main routes **P1** are located within the work area **70**, and the turning routes **P2** are located in the headland **80**. The dashed lines in FIG. **8** represent the working width of the implement **300**. The working width is set in advance and recorded in the storage **170**. The working width may be set by the user operating the operation terminal **200** and recorded in the storage **170**. Alternatively, the working width may be automatically recognized when the implement **300** is connected to the work vehicle **100** and recorded in the storage **170**. The interval between the plurality of main routes **P1** is adjusted to the working width. The target route may be determined based on the user's operation before automatic steering driving is started.

Next, an example of control during automatic steering by the controller **180** will be described.

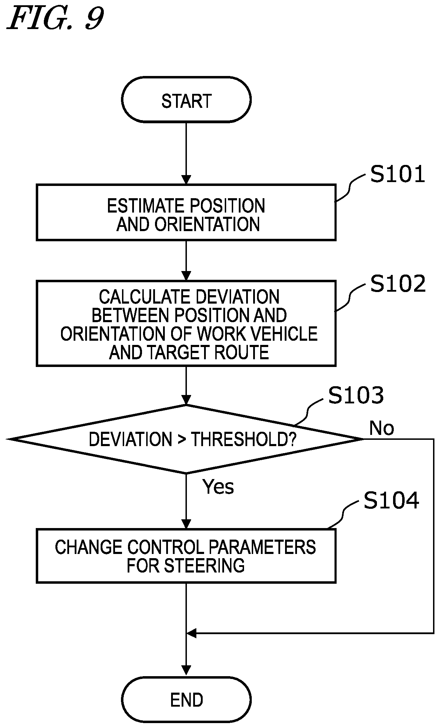

FIG. **9** is a flow chart showing an example of the operation performed during automatic steering by the controller **180**. The controller **180** is configured or programmed to perform automatic steering driving by executing the operations of steps S101 to S105 shown in FIG. **9** while the work vehicle **100** is traveling. The controller **180** first estimates the position and the orientation of the work vehicle **100** based on data output from the GNSS unit **120** and the IMU **125** (step S101). For example, the controller **180** estimates the position and the orientation of the work vehicle **100** based on time-series data output from the GNSS unit **120** and time-series data output from the IMU **125**. This process is referred to as the "localization process". Note that the orientation is expressed by the angle of the direction in which the work vehicle **100** is facing relative to a reference direction. For estimating the position and the orientation, an estimation algorithm that uses an extended Kalman filter may be used, for example. The estimation of the position and the orientation is not limited to an extended Kalman filter, but may be done using any estimation algorithm. Next, the controller **180** calculates the deviation between the position and the orientation of the work vehicle **100** and the target route (step S102). The position deviation represents the distance between the position of the work vehicle **100** at that point in time and the target route. The directional deviation represents the magnitude of the angle between the orientation of the work vehicle **100** at that point in time and the direction of the target route. The controller **180** determines whether the calculated position deviation exceeds a predetermined threshold value, and whether the calculated directional deviation exceeds another predetermined threshold value (step S103). If at least one of the position deviation and the directional deviation exceeds the respective threshold value, the controller **180** changes the steering angle by changing the control parameters for the steering device included in the drive device **140** so as to decrease the deviation. The control parameters may be, for example, control instruction values which are input to a hydraulic device or an electric motor that changes the steering angle of the front wheels. If neither the position deviation nor the directional deviation exceeds the respective threshold in step S103, the operation of step S104 is omitted. The controller **180** repeats the operation of steps S101 to S104 until an instruction to end the automatic steering is issued. The controller **180** may be configured or programmed to estimate the position and the orientation of the work vehicle **100** and determine the control parameters for steering at a frequency of 100 times per second (100 Hz), for example. This operation is performed by the ECU **183** in the controller **180**.

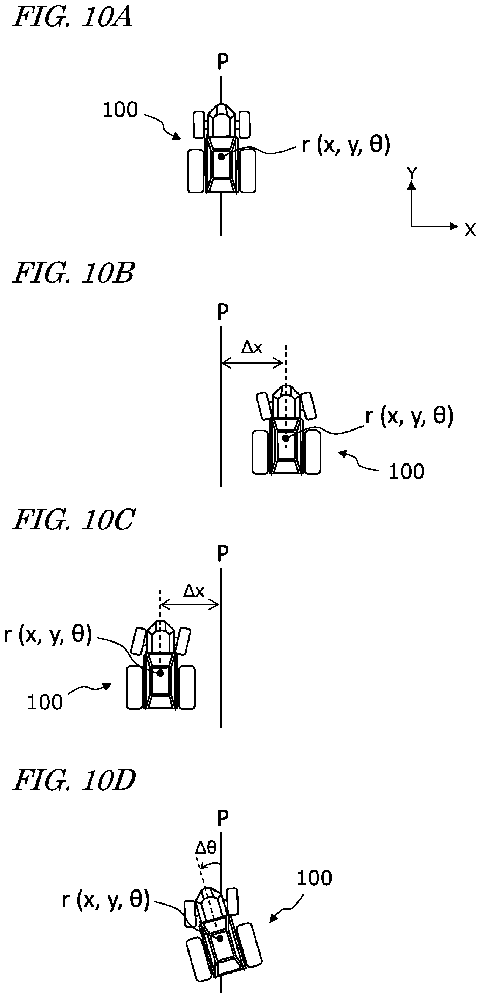

Referring to FIGS. **10A** to **10D**, an example of steering control by the controller **180** will be described in more detail.

FIG. **10A** is a diagram showing an example of the work vehicle **100** traveling along the target route **P**. FIG. **10B** is a diagram showing an example of the work vehicle **100** located at a position shifted to the right from the target route **P**. FIG. **10C** is a diagram showing an example of the work vehicle **100** located at a position shifted to the left from the target route **P**. FIG. **10D** is a diagram showing an example of the work vehicle **100** oriented in a direction inclined relative to the target route **P**. In these figures, the pose, which indicates the position and orientation of the work vehicle **100** as estimated based on signals output from the GNSS unit **120** and the IMU **125**, is expressed as r(x,y,θ). (x,y) are the coordinates indicating the position of the reference point of the work vehicle **100** in the XY coordinate system, which is a two-dimensional coordinate system fixed to the earth. In the examples shown in FIGS. **10A** to **10D**, the reference point of the work vehicle **100** is at the location where the GNSS antenna is installed on the cabin, but the location of the reference point is arbitrary. θ is an angle that represents the measured orientation of the work vehicle **100**. In the illustrated examples, the target route **P** is parallel to the Y axis, but in general, the target route **P** is not necessarily parallel to the Y axis.

As shown in FIG. **10A**, if the position and orientation of the work vehicle **100** are not deviated from the target route **P**, the controller **180** does not change but maintains the steering angle and the speed of the work vehicle **100**.

As shown in FIG. **10B**, if the position of the work vehicle **100** is shifted to the right from the target route **P**, the controller **180** changes the steering angle by changing the rotation angle of the steering wheel included in the drive device **140** so that the travel direction of the work vehicle **100** tilts to the left to be closer to the route **P**. At this time, the speed may also be changed in addition to the steering angle. The magnitude of the steering angle may be adjusted in accordance with the magnitude of the position deviation **Δx**, for example.

As shown in FIG. **10C**, if the position of the work vehicle **100** is shifted to the left from the target route **P**, the controller **180** changes the steering angle by changing the rotation angle of the steering wheel so that the travel direction of the work vehicle **100** tilts to the right to be closer to the route **P**. Also in this case, the speed may also be changed in addition to the steering angle. The amount of change in the steering angle may be adjusted in accordance with the magnitude of the position deviation **Δx**, for example.

As shown in FIG. **10D**, if the position of the work vehicle **100** is not significantly off the target route **P**, but the orientation is different from the direction of the target route **P**, the controller **180** changes the steering angle so as to reduce the directional deviation **Δθ.** Also in this case, the speed may also be changed in addition to the steering angle. The magnitude of the steering angle may be adjusted in accordance with the magnitude of the position deviation **Δx** and the magnitude of the directional deviation **Δθ**, for example. For example, the smaller the absolute value of the position deviation **Δx**, the larger the amount of change in the steering angle in accordance with the directional deviation **Δθ** may be. Where the absolute value of the position deviation **Δx** is large, the steering angle will need to be changed greatly in order to return to the route **P**, which will result in the absolute value of the directional deviation **Δθ** being large. Conversely, where the absolute value of the position deviation **Δx** is small, the directional deviation **Δθ** needs to be brought close to zero. For this reason, it is appropriate to make relatively large the weight (i.e., control gain) of the directional deviation **Δθ** for determining the steering angle.

Control techniques such as PID control or MPC control (model predictive control) can be applied to the steering control and speed control of the work vehicle **100**. By applying these control techniques, it is possible to smoothly control the work vehicle **100** to come closer to the target route **P**.

Note that if an obstacle is detected by one or more obstacle sensors **130** while traveling, the controller **180** stops the work vehicle **100**, or switches from the automatic steering mode to the manual steering mode. When an obstacle is detected, the controller **180** may control the drive device **140** to avoid the obstacle.

Next, an example of the operation that enables automatic steering mode to be selected immediately after the engine (or drive electric motor) is started by performing the key-on operation to turn on the key switch **212** of the work vehicle **100** at an extremely low speed (e.g., 0.1 to 0.2 km/h) will be described.

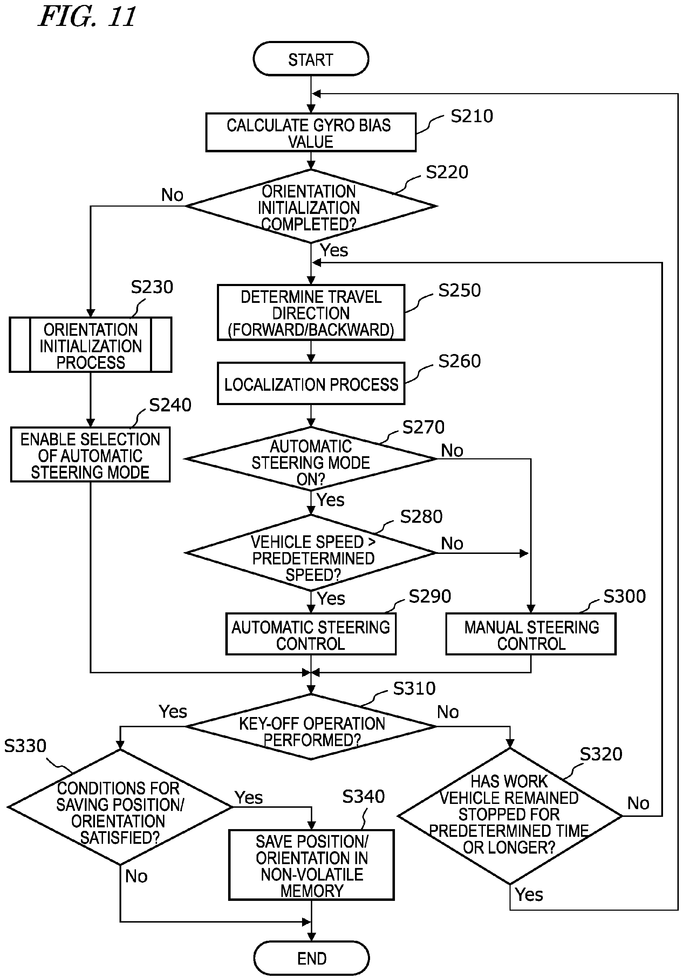

FIG. **11** is a flow chart showing an example operation performed by the controller **180** after the key-on operation is performed by the user. The operation shown in FIG. **11** is performed by the ECU **183** in the controller **180**. When the key-on operation is performed, the controller **180** performs the operation of steps S210 to S320 shown in FIG. **11**. The operations of these steps will be described below.

In step S210, the controller **180** calculates the gyro bias value of the IMU **125**. The gyro bias value is the average value of the output of the 3-axis gyroscope included in the IMU **125** when the vehicle is stationary. The controller **180** calculates the gyro bias value by averaging the output values of the gyroscope of the IMU **125** over a predetermined period of time (e.g., 5 to 7 seconds) while the work vehicle **100** is stopped. This gyro bias value is used to correct the output values of the gyroscope of the IMU **125** in the localization process of step S280. The controller **180** stores the calculated gyro bias value in a memory (e.g., the RAM **535** shown in FIG. **6**). After step S210, the process proceeds to step S220.

In step S220, the controller **180** determines whether the initialization of the orientation has been completed. The initialization of the orientation is a process of determining the initial value of the orientation (i.e., initial orientation) of the work vehicle **100**, which is necessary for automatic steering control. If the initialization of the orientation has not been completed, the process proceeds to step S230. If initialization of the orientation has been completed, the proceeds to step S250. Immediately after the key-on operation, the initialization of the orientation has not yet been completed, and therefore the process proceeds to step S230.

In step S230, the controller **180** executes the orientation initialization process to determine the initial orientation. The details of the orientation initialization process will be described later. After step S230, the process proceeds to step S240.

In step S240, the controller **180** enables selection of the automatic steering mode. For example, the controller **180** changes the icon usable to select the automatic steering mode displayed on the display of the operation terminal **200** from a non-selectable state to a selectable state. Alternatively, the controller **180** changes the state of the switch to switch between the manual steering mode and the automatic steering mode from a state that does not accept the switch operation to a state that accepts the switch operation. Thus, the controller **180** enables the user to perform an operation to initiate the automatic steering control after determining the initial orientation. After step S240, the process proceeds to step S290.

If it is determined in step S220 that the initialization of the orientation has been completed, the processes of step S250 and subsequent steps are executed.

In step S250, the controller **180** determines the direction of travel of the work vehicle **100**. In the present specification, "direction of travel" refers to the forward direction or the backward direction. That is, the controller **180** determines whether the work vehicle **100** is moving forward or backward (or stopped). Since the manipulated variables of the automatic steering control vary depending on whether the work vehicle **100** is moving forward or backward, the direction of travel is determined in this step. The method for determining the direction of travel can differ depending on the vehicle speed. The controller **180** determines the direction of travel by the following method, for example.
- When the vehicle speed is less than 0.5 km/h, the direction of travel is determined based on the time series position data output from the GNSS unit **120**.
- When the vehicle speed is equal to or greater than 0.5 km/h, for example, the direction of travel is determined based on the measurement value of the T/M rotation sensor **156**.

This determination method is adopted in consideration of the following. First, when the vehicle speed is equal to or greater than 0.5 km/h or more, for example, it is easy to determine whether the wheels are rotating forward or backward based on the measurement value of the T/M rotation sensor **156**. However, when the vehicle speed is less than 0.5 km/h, for example, since the rotation speed of the axle is too low, it is not possible to accurately determine whether the axle is rotating forward or backward based on the measurement value of the T/M rotation sensor **156**. Therefore, in such a low speed range, the direction of travel is determined based on the path of the position of the work vehicle **100**, as indicated by the time series of position data (i.e. the change over time of the position coordinates) output from the GNSS unit **120**. Note that in an extremely low speed range, such as when the vehicle speed is below 0.2 km/h, for example, it may not be possible to accurately determine whether the work vehicle **100** is moving forward or backward due to fluctuations in the position data from the GNSS unit **120**. Therefore, in such an extremely low speed range, the direction of travel may be determined based also on the state of the forward/reverse switch **214** (e.g., shuttle lever) (i.e., forward, neutral, or reverse) in addition to the data output from the GNSS unit **120**. By a method described above, the direction of travel of the work vehicle **100**, i.e., whether it is moving forward or backward, is determined. After step S250, the process proceeds to step S260.

In step S260, the controller **180** executes the localization process. This process is the same as the process of step S101 as described above with reference to FIG. **9**. That is, the controller **180** estimates the position and the orientation of the work vehicle **100** based on the time-series data output from the GNSS unit **120** and the time-series data output from the IMU **125**. Here, if step S260 is executed for the first time after the initial orientation is determined in step S230, the determined initial orientation is used as the orientation of the work vehicle **100** for the subsequent localization process. In the localization process, the output value of the gyroscope of the IMU **125** is used in calculation after being corrected by subtracting the gyro bias value calculated in step S210 from the actual output value. For estimating the position and the orientation, an estimation algorithm that uses an extended Kalman filter may be used, for example. The estimation of the position and the orientation is not limited to an extended Kalman filter, but may be done using any estimation algorithm. After step S260, the process proceeds to step S270.

In step S270, the controller **180** determines whether the automatic steering mode is turned on. If the automatic steering mode is turned on by the user, the process proceeds to step S280. If the automatic steering mode is off, that is, the manual steering mode is on, the process proceeds to step S300. In the manual driving mode, steering is performed by the steering operation by the driver.

At step S280, the controller **180** determines whether the traveling speed (vehicle speed) of the work vehicle **100** is higher than a predetermined speed. The predetermined speed may be set to a very low speed such as 0.1 km/h, for example. In the present example embodiment, the automatic steering control is started when the vehicle speed exceeds the predetermined speed after the operation to initiate the automatic steering control has been performed. On the other hand, if the vehicle speed has not exceeded the predetermined speed, the automatic steering control is not started, and control remains on stand-by. If the vehicle speed is higher than the predetermined speed, the process proceeds to step S290, and the automatic steering control is started. The automatic steering control includes the operations of steps S102 to S104 shown in FIG. **9**. By the operations of steps S102 to S104, the control parameters are adjusted for steering so as to bring the position and the orientation of the work vehicle **100** closer to the target route. On the other hand, if the vehicle speed is less than or equal to the predetermined speed, the process proceeds to step S300 and the manual steering state is continued. After steps S290 and S300, the process proceeds to step S310.

In step S310, the controller **180** determines whether an operation of turning off the key switch **212** (key-off operation) has been performed. If the key-off operation has not been performed, the process proceeds to step S320. If the key-off operation has been performed, the process proceeds to step S330. Note that the process transitions to step S330 also if the key-off operation is performed while any of steps S210 to S300 described above is being executed.

In step S320, the controller **180** determines whether the work vehicle **100** has remained stopped for a predetermined period of time (e.g., 10 seconds) or longer. If the work vehicle **100** has not been stopped or the predetermined period of time has not elapsed since the work vehicle **100** is stopped, the process returns to step S250 and the aforementioned localization and steering control processes are repeated. If the stopped state has continued for the predetermined time or more, the process returns to step S210 and the gyro bias value is calculated again. In this way, in the present example embodiment, the gyro bias value is calculated and updated each time the work vehicle **100** remains stopped for the predetermined time or more.

When the key-off operation is performed, the controller **180** determines, in step S330, whether conditions for saving (i.e., storing) the position and the orientation of the work vehicle 100 (hereinafter referred to as the "saving conditions") are satisfied. The saving conditions are imposed in order to prevent unreliable values of the position and the orientation from being stored and an incorrect orientation from being determined as the initial orientation at the next key-on. The saving conditions may include all or some of the following (a) to (d), for example.
(a) GNSS positioning accuracy is "RTK".
(b) Initialization of orientation has been completed.
(c) Vehicle speed at time of key-off is less than a predetermined value (e.g., 0.5 km/h).
(d) Orientation value is within a normal range.

Regarding condition (a), if the GNSS positioning accuracy is lower than "RTK" (e.g., "DGPS" or "GPS"), the error in the estimated position and orientation will be large, making it difficult to perform high-accuracy automatic steering. Therefore, the condition that GNSS positioning accuracy is "RTK" may be imposed as one of the saving conditions. Note that the GNSS unit 120 in the present example embodiment is configured or programmed to perform positioning in the high-accuracy RTK mode in environments where it is easy to receive radio waves from satellites, and to switch to a mode with lower positioning accuracy, such as the DGPS mode, in environments where it is difficult to receive radio waves (e.g., in environments where radio waves are blocked by tall trees).

Regarding condition (b), if the initialization of the orientation has not been completed, for example, if the key-off operation is performed before the orientation initialization process of step S230 has been completed, or if the orientation initialization is not completed normally due to an error, the orientation to be saved has not been determined. Thus, the condition that the orientation initialization has been completed may be imposed as one of the saving conditions.

Regarding condition (c), if the vehicle speed is equal to or greater than 0.5 km/h, for example, at the time of key-off operation, the work vehicle **100** may move by inertia even after key-off, and the position and the orientation may change significantly from the position and the orientation at the time of key-off. Thus, the condition that the vehicle speed is less than a predetermined value may be imposed as one of the saving conditions.

Regarding condition (d), if the orientation value is not within the normal range (e.g., 0° to 360°), that orientation value is an abnormal value and is not reliable. Thus, the condition that the orientation value is within the normal range may be imposed as one of the saving conditions. Note that the location value, in addition to the orientation value, being in a normal range, may also be included in the condition (d). Values of other parameters used for steering control other than the position and the orientation being in a normal range may also be included in the condition (d).

If saving conditions that includes all or some of (a), (b), (c), and (d) above are satisfied, the process proceeds to step S340. If the saving conditions are not satisfied, the process ends without saving the position and the orientation.

In step S340, the controller **180** saves the values of the position and the orientation that are estimated at that point in time in a non-volatile memory (e.g., the ROM **534**). The saved values of the position and the orientation can be used in the orientation initialization process of step S230 when the next key-on operation is performed.

Next, a specific example of the orientation initialization process in step S230 will be described.

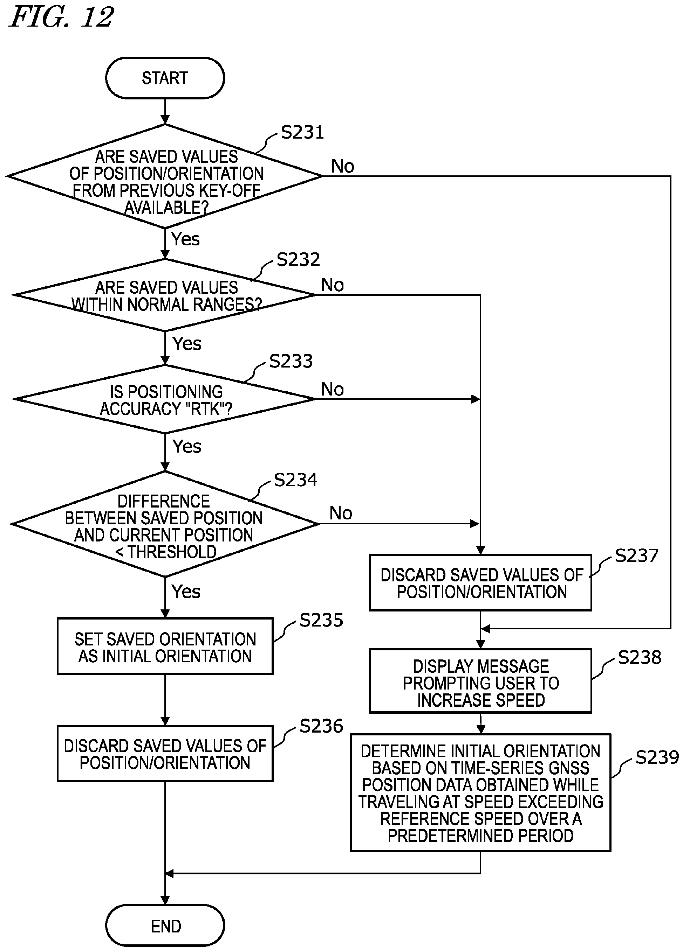

FIG. **12** is a flow chart showing a specific example of the orientation initialization process in step S230. In this example, step S230 includes the processes of steps S231 to S239. The processes of these steps will be described below.

In step S231, the controller **180** determines whether the position and the orientation (saved values) at the time of the previous key-off are saved in the non-volatile memory. If there are saved values, the process proceeds to step S232. If there are no saved values, the process proceeds to step S238.

In step S232, the controller **180** determines whether the saved values of the position and the orientation are within the normal ranges. The normal range for position can be set in advance as a range of coordinate values (e.g., latitude and longitude) of an area in which the work vehicle **100** can be used, for example. The normal range for orientation can be set in advance as a range from 0° to 360°, for example. If the saved values of the position and the orientation are both within the normal ranges, the process proceeds to step S233. If at least one of the saved values of the position and the orientation is outside the normal range, that is, an abnormal value, the process proceeds to step S237.

In step S233, the controller **180** determines whether the positioning accuracy of the GNSS unit **120** is "RTK". If the positioning accuracy is "RTK", the process proceeds to step S234. If the positioning accuracy is not "RTK" (e.g., "DGPS"), the process proceeds to step S237.

In step S234, the controller **180** calculates the difference between the saved position value and the position currently being measured by the GNSS unit **120**, and determines whether the difference is less than a threshold value. The threshold value may be set within a range of 10 cm to 50 cm, for example. When the position is expressed in terms of latitude and longitude, it may be determined whether the difference between the saved value and the measured value of at least one of the latitude and the longitude is less than a threshold value (e.g., 0.000003 degree). The threshold value may vary depending on the region where the work vehicle **100** is used. If the difference between the saved position value and the currently measured position value is less than the threshold value, the process proceeds to step S235. If the difference is equal to or greater than the threshold value, the process proceeds to step S237.

In step S235, the controller **180** sets the value of the orientation saved in the nonvolatile memory as the initial orientation. This initial orientation is used as the initial value of the orientation in the localization process in subsequent iterations of step S260. After step S235, the process proceeds to step S236.

In step S236, the controller **180** discards (erases) the saved values of the position and the orientation from the non-volatile memory. Then, the process proceeds to step S240 shown in FIG. **11**, and it becomes possible for the user to select the automatic steering mode.

In the present example embodiment, if the determination result from any of steps S231, S232, S233, and S234 is "No", a process is executed to prompt the user to increase the speed of the work vehicle **100** in order to obtain the initial value of the orientation from the time-series data output from the GNSS unit **120**. This is because the orientation at the time of the previous key-off is not saved, or because the saved value is not reliable. If the determination result is "No" in steps S232 to S234, the process of step S237 is performed.

In step S237, the controller **180** discards the saved values of the position and the orientation from the non-volatile memory. Note that step S237 may be performed after step S238 or S239.

In step S238, the controller **180** displays a message on the operation terminal **200** that prompts the user to increase the traveling speed of the work vehicle **100** to a speed that is greater than or equal to the reference speed (e.g., 0.45 km/h or 0.5 km/h). An example in which the reference speed is 0.5 km/h will be described.

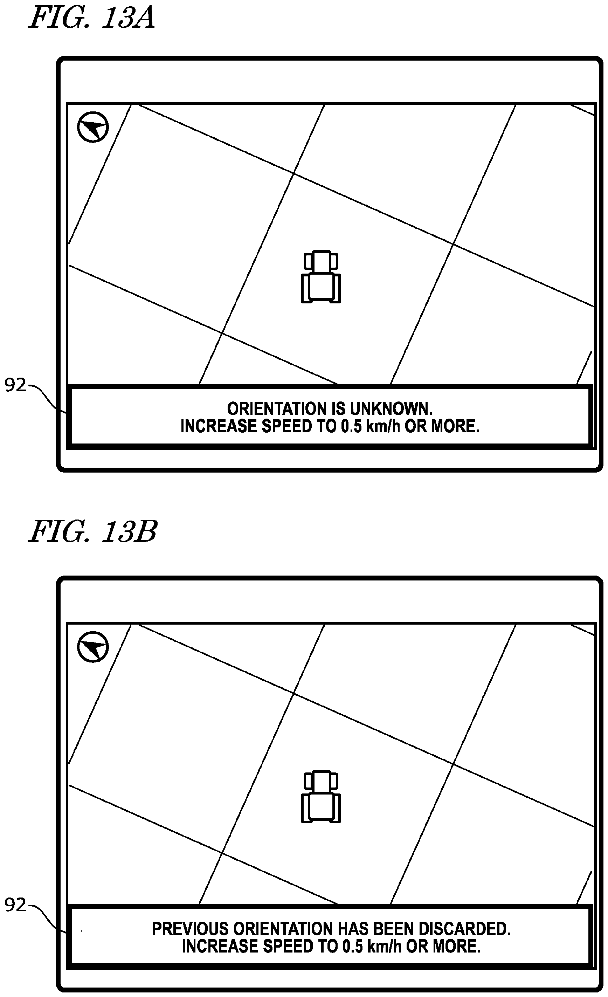

FIGS. **13A** and **13B** show example messages displayed on the operation terminal **200**. FIG. **13A** shows an example message displayed when the determination result from step S231 is "No". In this example, because the orientation at the time of the previous key-off has not been saved, a message **92** is displayed that reads "Orientation is unknown. Increase speed to 0.5 km/h or more". FIG. **13B** shows an example message displayed when the determination result from any of steps S232, S233, and S234 is "No". In this example, because the previously saved orientation has been discarded, a message **92** is displayed that reads "Previous orientation has been discarded. Increase speed to 0.5 km/h or more". Note that the reference speed and the content of message are not limited to these examples, and can be modified in various ways.

If the user follows the instruction in the message **92** and increases the speed of the work vehicle **100** to the reference speed or more, and the process of step S239 is executed after elapse of a predetermined amount of time (e.g., 1 second). The predetermined amount of time may be 0.1 seconds or more and 3 seconds or less in one example, or may be 0.5 seconds or more and 2 seconds or less in another example.

In step S239, the controller **180** determines the initial orientation based on time series position data from the GNSS unit **120** that is obtained over a predetermined period of time in which the work vehicle **100** travels at a speed higher than the reference speed. For example, if the GNSS unit **120** outputs measured position values (coordinate values) at 10 Hz, the controller **180** determines the orientation of the work vehicle **100** based on the change through the ten coordinate values output per second (i.e., the path). The controller **180** stores the determined orientation in the memory as the initial orientation. When the process of step S239 is completed, the process proceeds to step S240 shown in FIG. **11**, allowing the user to select the automatic steering mode.

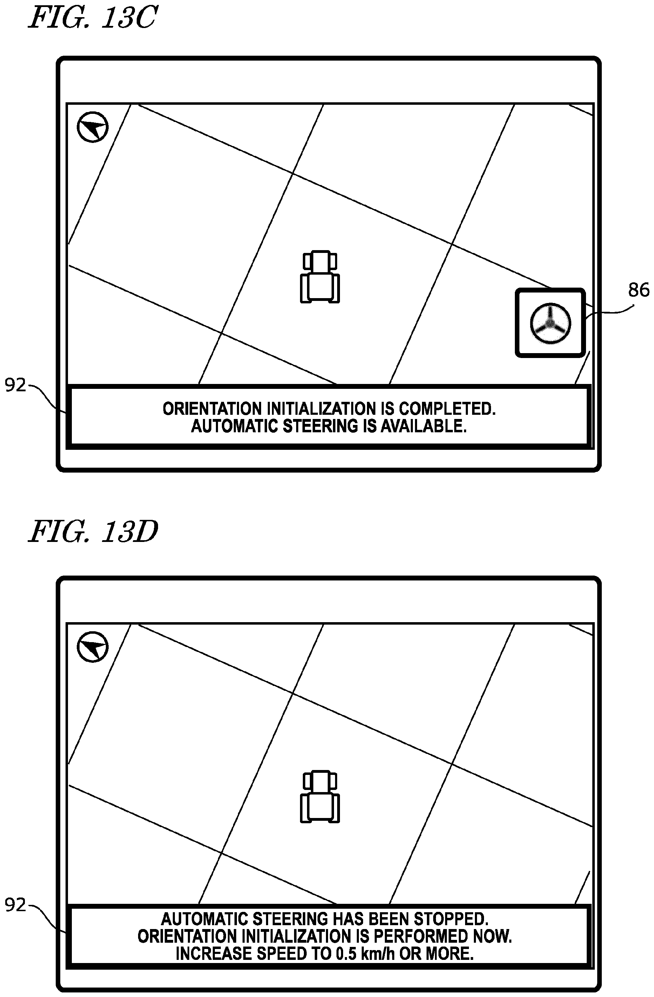

FIG. **13C** is a diagram showing an example display screen indicating that the automatic steering mode is now selectable. In this example, the operation terminal **200** displays a message **92** that reads "Initialization of orientation is completed. Automatic steering is available", and an icon **86** for selecting the automatic steering mode. The user can turn on the automatic steering mode by selecting (e.g., tapping or clicking) the icon **86**. Note that until the automatic steering mode becomes selectable in step S240, the icon **86** may be not displayed or may be displayed in a non-selectable manner.

As described above, the controller **180** of the present example embodiment stores the orientation of the work vehicle **100** in a non-volatile memory (the ROM **534**) in response to the key-off operation of the work vehicle **100**. After the key-on operation of the work vehicle **100** is next performed, the controller **180** starts the automatic steering control using the orientation stored in the non-volatile memory as the initial orientation of the work vehicle **100**. For example, if the key-on operation is performed while the orientation at the time of the previous key-off is stored in the non-volatile memory, the controller **180** makes available the operation to initiate the automatic steering control (i.e., an operation of turning on the automatic steering mode) while the work vehicle **100** is stopped. After the operation to initiate the automatic steering control is performed, the controller **180** starts the automatic steering control using the orientation stored in the non-volatile memory as the initial orientation of the work vehicle **100**.

By such an operation, it is possible to start the automatic steering control after the key-on operation without the user having to increase the speed of the work vehicle **100** to the reference speed (e.g., 0.45 km/h, 0.5 km/h, etc.). Thus, for example, even immediately after the key-on operation to start the engine, where the key-off operation had been performed with the implement stuck in the ground, it is possible to start a tasked travel by automatic steering, thus significantly improving the convenience.

The controller **180** in the present example embodiment starts the automatic steering control (steps S270 to S290 of FIG. **11**) when the traveling speed of the work vehicle exceeds a predetermined speed (e.g., 0.1 km/h) after the operation to initiate the automatic steering control is performed. Thus, according to the present example embodiment, it is possible to start the automatic steering control at a lower speed than with conventional techniques (e.g., 0.45 km/h).

In the present example embodiment, the controller **180** stores the position and the orientation of the work vehicle **100** in the non-volatile memory in response to the key-off operation (step S340). Then, in response to the key-on operation, the controller **180** calculates the difference between the position stored in the non-volatile memory and the position measured by the positioning system (the GNSS unit **120**) (step S234). If the difference is less than a threshold value, the controller **180** makes available the operation to initiate the automatic steering control using the orientation stored in the non-volatile memory as the initial orientation (step S235, S240). If the difference is equal to or greater than the threshold value, the controller **180** discards the position and the orientation stored in the non-volatile memory (step S237), and disables the operation to initiate the automatic steering control until the traveling speed of the work vehicle exceeds the reference speed (step S239). For example, if the difference is equal to or greater than the threshold value, the controller **180** discards the position and the orientation stored in the non-volatile memory (step S237), displays a message on the display terminal that prompts the user to increase the speed of the work vehicle **100** (step S238), and makes available the operation to initiate the automatic steering control when the traveling speed exceeds the reference speed (step S239, S240). When the position and the orientation stored in the non-volatile memory are discarded, the controller **180** may display a message on the display terminal that indicates that the position and/or the orientation have been discarded as shown in FIG. **13B**.

Thus, in the present example embodiment, only when the position of the work vehicle **100** has not changed significantly between the time of key-off and the time of next key-on, the stored orientation is set as the initial orientation. This function can be implemented to deal with cases where the position of the work vehicle **100** changes after the key-off operation, such as when the work vehicle **100** is transported to another location by another vehicle. If the position of the work vehicle **100** has changed significantly, the orientation must also have changed, so the stored orientation is not reliable. Therefore, in such a case, the previously stored orientation is discarded, and the initial orientation is determined by the method of step S239. This avoids setting an unreliable orientation as the initial orientation.

In the example shown in FIG. **13C**, the user interface displayed on the display terminal includes the icon **86** used to provide an instruction to start the automatic steering control. If the difference between the previously stored position and the position measured by the positioning system is equal to or greater than a threshold value, the controller **180** disables the operation to initiate the automatic steering control by making the icon **86** inactive (including erasing the icon) until the traveling speed of the work vehicle **100** exceeds the reference speed, as shown in FIG. **13B**. If the difference is less than the threshold value, the saved value of the orientation is set as the initial orientation, and then the operation to initiate the automatic steering control is made available by activating the icon **86** as shown in FIG. **13C**. This allows the user to determine whether the automatic steering control can be started based on whether or not the icon **86** is active.

Note that in the present example embodiment, the position and the orientation of the work vehicle **100** are saved in step S320 shown in FIG. **11**, but only the orientation may be saved. In that case, the processes of steps S233 and S234 shown in FIG. **12** may be omitted.

If the traveling speed of the work vehicle **100** at the time of the key-off operation in step S310 is equal to or greater than a threshold value (e.g., 0.5 km/h), the controller **180** may stop the work vehicle **100** without storing the orientation in the non-volatile memory or after storing the orientation in the non-volatile memory such that it will not be used next time. The "manner that it will not be used next time" includes, for example, storing the information of the orientation by adding a flag indicating that it cannot be used, or discarding the information in the orientation initialization process (step S230) after the next key-on.

As described above, the positioning system in the present example embodiment includes the GNSS unit **120** that performs positioning using RTK-GNSS. When the positioning of the RTK-GNSS is not possible when the key-off operation is performed, the controller **180** may stop the operation of the work vehicle **100** without storing the measured orientation in the non-volatile memory or after storing the orientation in the non-volatile memory such that it will not be used next time. This avoids initializing the orientation based on an orientation based on a position with low reliability.

The positioning system in the present example embodiment further includes the IMU **125**. After starting the automatic steering control, the controller **180** estimates the position and the orientation of the work vehicle **100** based on the first time-series data output from the GNSS unit **120** and the second time-series data output from the IMU **125** (step S260), and performs the automatic steering control based on the estimated position and orientation and the target route (step S290). In the automatic steering control immediately after the key-on operation, the position and the orientation are estimated using the orientation measured at the time of the previous key-off operation as the initial orientation. This enables high-accuracy automatic steering even at an extremely low speed, e.g., 0.1 km/h.

When the vehicle speed exceeds the reference speed after the automatic steering control is started, the controller **180** may calculate the difference between the first orientation estimated based on the first time-series data and the second orientation estimated based on the first time-series data and the second time-series data, and may stop the automatic steering control if the difference is greater than a threshold value. This function is based on the fact that if the second orientation, which is estimated based on the second time-series data that is generated using the orientation at the time of the previous key-off as the initial orientation, differs significantly from the first orientation, which is estimated based on the first time-series data that is obtained from the GNSS unit **120**, it is highly likely that the orientation at the time of the previous key-off is incorrect. If the difference between the first orientation and the second orientation is greater than a threshold value, the controller **180** may stop the automatic steering control and display a warning on the operation terminal **200**. In this case, the controller **180** may stop the automatic steering control and determine the initial orientation by performing the processes of steps S237 to S239 shown in FIG. **12**. FIG. **13D** is a diagram showing an example of the warning message **92** displayed on the operation terminal **200** in this case. By implementing such a function, it is possible to improve the reliability of the automatic steering control in extremely low speed ranges.

In the example embodiment described above, the work vehicle **100** may be a work vehicle that performs automated driving unmanned. In that case, elements that are only necessary for human driving, such as the cabin, the driver seat, the steering wheel, and the operation terminal, may not be provided in the work vehicle **100**. The unmanned work vehicle may perform the same operations as those in the example embodiment described above by autonomous traveling or remote control by the user.

A control system that provides the various functions of the example embodiment described above can also be retrofitted to work vehicles that do not have those functions. Such control systems can be manufactured and sold independently of work vehicles. Computer programs used in such control systems can also be manufactured and sold independently of work vehicles. Computer programs can be provided, for example, stored in a computer-readable non-transitory storage medium. Computer programs can also be provided as downloads via an electrical telecommunication line (e.g., the Internet).

As described above, the present disclosure includes a work vehicle, a controller, a control method, and a computer program set forth below.

### [Item 1]

A work vehicle capable of automatic steering driving, comprising:
a positioning system to perform positioning of the work vehicle; and
a controller including a non-volatile memory and being configured or programmed to:
   estimate an orientation of the work vehicle based on a change over time of a position of the work vehicle measured by the positioning system;
   perform automatic steering control of the work vehicle based on the position and the orientation of the work vehicle and a set target route;
   store the orientation of the work vehicle in the non-volatile memory in response to a key-off operation of the work vehicle; and
   after a key-on operation of the work vehicle is performed, initiate the automatic steering control using the orientation stored in the non-volatile memory as an initial orientation of the work vehicle.

### [Item 2]

The work vehicle according to item 1, wherein the controller is configured or programmed to:
enable an operation to initiate the automatic steering control while the work vehicle is stopped when the key-on operation is performed and the orientation is stored in the non-volatile memory, and
after the operation is performed, initiate the automatic steering control using the orientation stored in the non-volatile memory as the initial orientation of the work vehicle.

### [Item 3]

The work vehicle according to item 2, wherein the controller is configured or programmed to initiate the automatic steering control when a traveling speed of the work vehicle exceeds a predetermined speed after the operation to initiate the automatic steering control is performed.

### [Item 4]

The work vehicle according to any one of items 1 to 3, wherein the controller is configured or programmed to:
store the position and the orientation of the work vehicle in the non-volatile memory in response to the key-off operation;
calculate a difference between the position stored in the non-volatile memory and a position measured by the positioning system in response to the key-on operation; and
enable the operation to initiate the automatic steering control using the orientation stored in the non-volatile memory as the initial orientation, when the difference is less than a threshold value.

### [Item 5]

The work vehicle according to item 4, wherein the controller is configured or programmed to, when the difference is equal to or greater than the threshold value, discard the position and the orientation stored in the non-volatile memory, and disable the operation to initiate the automatic steering control until a traveling speed of the work vehicle exceeds a reference speed.

### [Item 6]

The work vehicle according to item 5, further comprising:
a display terminal that provides a user interface for performing operations to start and stop the automatic steering control, wherein:
the controller is configured or programmed to:
calculate a difference between the position stored in the non-volatile memory and a position measured by the positioning system in response to the key-on operation;
when the difference is equal to or greater than the threshold value, discard the position and the orientation stored in the non-volatile memory, display a message on the display terminal that prompts a user to increase a speed of the work vehicle, and enable the operation to initiate the automatic steering control when the traveling speed exceeds the reference speed; and
when the difference is less than the threshold value, enable the operation to initiate the automatic steering control using the orientation stored in the non-volatile memory as the initial orientation.

### [Item 7]

The work vehicle according to item 6, wherein when the position and the orientation stored in the non-volatile memory are discarded, the controller is configured or programmed to display a message on the display terminal that indicates that the position and/or the orientation have been discarded.

### [Item 8]

The work vehicle according to item 6, wherein:
the user interface includes an icon used for instructing initiation of the automatic steering control; and
the controller is configured or programmed to:
   when the difference is equal to or greater than the threshold value, disable the operation to initiate the automatic steering control by deactivating the icon until the traveling speed exceeds the reference speed; and
   when the difference is less than the threshold value, enable the operation to initiate the automatic steering control by activating the icon.

### [Item 9]

The work vehicle according to any one of items 1 to 3, wherein the controller is configured or programmed to, when a traveling speed of the work vehicle at a time of the key-off operation is equal to or greater than a threshold value, stop an operation of the work vehicle without storing the orientation in the non-volatile memory or after storing the orientation in the non-volatile memory such that the orientation will not be used next time.

### [Item 10]

The work vehicle according to any one of items 1 to 3, wherein:
the positioning system includes a GNSS unit to perform positioning using RTK-GNSS; and
the controller is configured or programmed to, when the positioning by the RTK-GNSS is not possible when the key-off operation is performed, stop an operation of the work vehicle without storing the orientation in the non-volatile memory or after storing the orientation in the non-volatile memory such that the orientation will not be used next time.

### [Item 11]

The work vehicle according to any one of items 1 to 3, wherein:
the positioning system further includes an inertial measurement unit; and
the controller is configured or programmed to, after initiating the automatic steering control, estimate the position and the orientation of the work vehicle based on first time-series data output from the GNSS unit and second time-series data output from the inertial measurement unit, and perform the automatic steering control based on the estimated position and orientation and the target route.

### [Item 12]

The work vehicle according to item 11, wherein the controller is configured or programmed to, after initiating the automatic steering control, calculate a difference between the orientation estimated based on the first time-series data and the orientation estimated based on the first and second time-series data, and stop the automatic steering control when the difference is greater than a threshold value.

### [Item 13]

The work vehicle according to item 12, further comprising a display terminal, wherein
the controller is configured or programmed to, after initiating the automatic steering control, stop the automatic steering control and display a warning on the display terminal when the difference between the orientation estimated based on the first time-series data and the orientation estimated based on the first and second time-series data is greater than the threshold value.

### [Item 14]

A controller for a work vehicle capable of automatic steering driving, comprising:
a non-volatile memory; and
one or more processor, wherein:
   the one or more processor is configured or programmed to:
   estimate an orientation of the work vehicle based on a change over time of a position of the work vehicle measured by a positioning system of the work vehicle;
   perform automatic steering control of the work vehicle based on the position and the orientation of the work vehicle and a set target route;
   store the orientation of the work vehicle in the non-volatile memory in response to a key-off operation of the work vehicle; and
   after a key-on operation of the work vehicle is performed, initiate the automatic steering control using the orientation stored in the non-volatile memory as an initial orientation of the work vehicle.

### [Item 15]

A method to be executed by one or more computers to control an operation of a work vehicle capable of automatic steering driving, comprising:
estimating an orientation of the work vehicle based on a change over time of a position of the work vehicle measured by a positioning system to perform positioning of the work vehicle;
performing automatic steering control of the work vehicle based on the position and the orientation of the work vehicle and a set target route;
storing the orientation of the work vehicle in a non-volatile memory in response to a key-off operation of the work vehicle; and
after a key-on operation of the work vehicle is performed, initiating the automatic steering control using the orientation stored in the non-volatile memory as an initial orientation of the work vehicle.

### [Item 16]

A computer program to be executed by one or more computers to control an operation of a work vehicle capable of automatic steering driving, wherein:
the computer program causes the one or more computing device to:
estimate an orientation of the work vehicle based on a change over time of a position of the work vehicle measured by a positioning system to perform positioning of the work vehicle;
perform automatic steering control of the work vehicle based on the position and the orientation of the work vehicle and a set target route;
store the orientation of the work vehicle in a non-volatile memory in response to a key-off operation of the work vehicle; and
after a key-on operation of the work vehicle is performed, initiate the automatic steering control using the orientation stored in the non-volatile memory as an initial orientation of the work vehicle.

The example embodiments and technologies of the present disclosure can be applied to work vehicles used in agricultural applications, such as tractors, transplanters, or harvesters. The example embodiments and technologies of the present disclosure can also be applied to work vehicles used in non-agricultural applications, such as construction work vehicles or snowplows.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A work vehicle (100) capable of automatic steering driving, comprising:
a positioning system (120) to perform positioning of the work vehicle; and
a controller (180) including a non-volatile memory (534) and being configured or programmed to:
estimate an orientation of the work vehicle based on a change over time of a position of the work vehicle measured by the positioning system;
perform automatic steering control of the work vehicle based on the position and the orientation of the work vehicle and a set target route;
store the orientation of the work vehicle in the non-volatile memory in response to a key-off operation of the work vehicle; and
after a key-on operation of the work vehicle is performed, initiate the automatic steering control using the orientation stored in the non-volatile memory as an initial orientation of the work vehicle.

2. The work vehicle according to claim 1, wherein the controller (180) is configured or programmed to:
enable an operation to initiate the automatic steering control while the work vehicle is stopped when the key-on operation is performed and the orientation is stored in the non-volatile memory; and
after the operation is performed, initiate the automatic steering control using the orientation stored in the non-volatile memory as the initial orientation of the work vehicle.

3. The work vehicle according to claim 2, wherein the controller (180) is configured or programmed to initiate the automatic steering control when a traveling speed of the work vehicle exceeds a predetermined speed after the operation to initiate the automatic steering control is performed.

4. The work vehicle according to any one of claims 1 to 3, wherein the controller (180) is configured or programmed to:
store the position and the orientation of the work vehicle in the non-volatile memory in response to the key-off operation;
calculate a difference between the position stored in the non-volatile memory and a position measured by the positioning system in response to the key-on operation; and
enable the operation to initiate the automatic steering control using the orientation stored in the non-volatile memory as the initial orientation, when the difference is less than a threshold value.

5. The work vehicle according to claim 4, wherein the controller (180) is configured or programmed to, when the difference is equal to or greater than the threshold value, discard the position and the orientation stored in the non-volatile memory, and disable the operation to initiate the automatic steering control until a traveling speed of the work vehicle exceeds a reference speed.

6. The work vehicle according to claim 5, further comprising:
a display terminal (200) that provides a user interface for performing operations to start and stop the automatic steering control, wherein:
the controller (180) is configured or programmed to:
calculate a difference between the position stored in the non-volatile memory and a position measured by the positioning system in response to the key-on operation;
when the difference is equal to or greater than the threshold value, discard the position and the orientation stored in the non-volatile memory, display a message on the display terminal (200) that prompts a user to increase a speed of the work vehicle, and enable the operation to initiate the automatic steering control when the traveling speed exceeds the reference speed; and
when the difference is less than the threshold value, enable the operation to initiate the automatic steering control using the orientation stored in the non-volatile memory as the initial orientation.

7. The work vehicle according to claim 6, wherein when the position and the orientation stored in the non-volatile memory (534) are discarded, the controller (180) is configured or programmed to display a message on the display terminal that indicates that the position and/or the orientation have been discarded.

8. The work vehicle according to claim 6, wherein:
the user interface (200) includes an icon used for instructing initiation of the automatic steering control; and
the controller (180) is configured or programmed to:
when the difference is equal to or greater than the threshold value, disable the operation to initiate the automatic steering control by deactivating the icon until the traveling speed exceeds the reference speed; and
when the difference is less than the threshold value, enable the operation to initiate the automatic steering control by activating the icon.

9. The work vehicle according to any one of claims 1 to 3, wherein the controller (180) is configured or programmed to, when a traveling speed of the work vehicle at a time of the key-off operation is equal to or greater than a threshold value, stop an operation of the work vehicle without storing the orientation in the non-volatile memory or after storing the orientation in the non-volatile memory such that the orientation will not be used next time.

10. The work vehicle according to any one of claims 1 to 3, wherein:
the positioning system (120) includes a Global Navigation Satellite System (GNSS) unit to perform positioning using RTK-GNSS; and
the controller (180) is configured or programmed to, when the positioning by the RTK-GNSS is not possible when the key-off operation is performed, stop an operation of the work vehicle without storing the orientation in the non-volatile memory or after storing the orientation in the non-volatile memory such that the orientation will not be used next time.

11. The work vehicle according to any one of claims 1 to 3, wherein:
the positioning system (120) further includes an inertial measurement unit; and
the controller (180) is configured or programmed to, after initiating the automatic steering control, estimate the position and the orientation of the work vehicle based on first time-series data output from the GNSS unit and second time-series data output from the inertial measurement unit, and perform the automatic steering control based on the estimated position and orientation and the target route.

12. The work vehicle according to claim 11, wherein the controller (180) is configured or programmed to, after initiating the automatic steering control, calculate a difference between the orientation estimated based on the first time-series data and the orientation estimated based on the first and second time-series data, and stop the automatic steering control when the difference is greater than a threshold value.

13. The work vehicle according to claim 12, further comprising a display terminal (200); wherein
the controller (180) is configured or programmed to, after initiating the automatic steering control, stop the automatic steering control and display a warning on the display terminal when the difference between the orientation estimated based on the first time-series data and the orientation estimated based on the first and second time-series data is greater than the threshold value.

14. A method to be executed by one or more computers to control an operation of a work vehicle capable of automatic steering driving, the method comprising:
estimating an orientation of the work vehicle based on a change over time of a position of the work vehicle measured by a positioning system to perform positioning of the work vehicle;
performing automatic steering control of the work vehicle based on the position and the orientation of the work vehicle and a set target route;
storing the orientation of the work vehicle in a non-volatile memory in response to a key-off operation of the work vehicle; and
after a key-on operation of the work vehicle is performed, initiating the automatic steering control using the orientation stored in the non-volatile memory as an initial orientation of the work vehicle.

15. A computer program to be executed by at least one computer to control an operation of a work vehicle capable of automatic steering driving, wherein
the computer program causes the one or more computing device to:
estimate an orientation of the work vehicle based on a change over time of a position of the work vehicle measured by a positioning system to perform positioning of the work vehicle;
perform automatic steering control of the work vehicle based on the position and the orientation of the work vehicle and a set target route;
store the orientation of the work vehicle in a non-volatile memory in response to a key-off operation of the work vehicle; and
after a key-on operation of the work vehicle is performed, initiate the automatic steering control using the orientation stored in the non-volatile memory as an initial orientation of the work vehicle.
